## Europäisches Patentamt

(19) **European Patent Office**

**Office européen des brevets**

(11) Numéro de publication: **0 264 324 B1**

(12) ## FASCICULE DE BREVET EUROPEEN

(45) Date de publication du fascicule du brevet:
04.10.89

(51) Int. Cl.⁴: **F16F 9/50**

(21) Numéro de dépôt: **87402220.5**

(22) Date de dépôt: **07.10.87**

(54) Dispositif amortisseur variable automatique.

(30) Priorité: **14.10.86 FR 8614496**

(43) Date de publication de la demande:
**20.04.88 Bulletin 88/16**

(45) Mention de la délivrance du brevet:
**04.10.89 Bulletin 89/40**

(84) Etats contractants désignés:
**DE GB IT**

(56) Documents cités:
**DE-A- 2 230 975**
**DE-A- 3 303 293**
**FR-A- 2 088 803**
**US-A- 3 966 030**

**PATENT ABSTRACTS OF JAPAN,**
**vol. 7, no. 221 (M-246)[1366], 30 septem-**
**bre 1983, page 156 M 246; & JP-A-58 116 210 (KAYABA**
**KOGYO K.K.) 11-07-1983**
**PATENT ABSTRACTS OF JAPAN,**
**vol. 9, no. 290 (M-430)[2013], 16 novem-**
**bre 1985, page 76 M 430; & JP-A-60 129 443 (SHIYOUWA**
**SEISAKUSHO) 10-07-1985**

(73) Titulaire: **AUTOMOBILES PEUGEOT, 75, avenue de la Grande Armée, F-75116 Paris(FR)**
Titulaire: **AUTOMOBILES CITROEN, 62 Boulevard Victor-Hugo, F-92200 Neuilly-sur-Seine(FR)**

(72) Inventeur: **Lachaize, Henri Gabriel, 13, avenue Paul Langevin, F-92230 Fontenay-aux-Roses(FR)**

(74) Mandataire: **Boivin, Claude, 9, rue Edouard-Charton, F-78000 Versailles(FR)**

## Description

L'invention concerne un dispositif amortisseur variable automatique du genre de ceux qui équipent les suspensions de véhicules automobiles de manière à freiner les oscillations de la caisse.

Plus particulièrement l'invention concerne un dispositif amortisseur destiné à équiper une suspension hydropneumatique et interposé entre le vérin de suspension et l'accumulateur hydropneumatique de chaque roue.

On sait qu'en général les amortisseurs hydrauliques exerçant la fonction précitée comportent des orifices obturés par des clapets dans les deux sens de déplacement du liquide, ces clapets étant propres à s'ouvrir quand croît la pression, de manière à ralentir les échanges entre le vérin et l'accumulateur; l'écoulement du liquide est ainsi freiné, ce qui a pour effet de réduire l'amplitude des oscillations.

Lorsqu'une suspension hydropneumatique équipée d'amortisseurs du type défini ci-dessus est soumise à une sollicitation rapide, il en résulte sur la caisse des efforts importants nuisibles.

La présente invention a pour objet un dispositif amortisseur propre à freiner fortement le débit entre le vérin et l'accumulateur quand ce débit est faible et à le freiner modérément quand ce débit est important.

Le document Patent Abstracts of Japan (vol. 7, no. 221 (M 246) [1366], 30.9.83 p. 156 M 246) décrit un dispositif amortisseur comprenant un ensemble cylindre-piston, deux amortisseurs portés par le piston, l'un d'eux étant fixe par rapport à ce piston alors que l'autre est mobile par rapport à lui, et un circuit de dérivation monté en parallèle avec l'amortisseur mobile.

Le document US-A 3 966 030 décrit un dispositif amortisseur de véhicule automobile comprenant un ensemble cylindre-piston, deux amortisseurs dont l'un est fixe et l'autre mobile, et un circuit de dérivation qui est monté en parallèle avec l'amortisseur fixe et sur lequel est interposé un clapet soumis à l'action de moyens élastiques.

Enfin le document FR-A 2 088 803 qui a été utilisé pour la délimitation de la revendication 1 décrit un dispositif amortisseur de véhicule automobile qui est interposé entre un vérin de suspension et un accumulateur hydropneumatique et comprend un ensemble cylindre-piston, deux amortisseurs disposés en série et un circuit de dérivation monté en parallèle avec l'un des amortisseurs.

L'amortisseur selon l'invention comme défini dans la revendication 1 comporte un bâti, un premier amortisseur monté sur le bâti, un piston portant un second amortisseur en série avec le premier amortisseur, et un circuit de dérivation qui est monté en parallèle avec le premier amortisseur et sur lequel est interposé un clapet indépendant du second amortisseur et soumis à l'action de moyens élastiques.

Dans l'un des sens d'écoulement, la différence de pression ajoute son effet à celle des moyens élastiques et le clapet reste appliqué sur son siège. Dans le sens d'écoulement opposé, l'effet de la différence de pression s'oppose à celle des moyens élastiques; quand cette différence de pression est supérieure à un certain seuil, c'est-à-dire quand le débit est supérieur à une certaine valeur, le clapet s'écarte de son siège de sorte que l'amortisseur fixe est courtcircuité totalement ou au moins partiellement; le liquide est ainsi moins freiné.

Le circuit de dérivation peut être constitué par un conduit prévu axialement dans l'amortisseur fixe.

L'amortisseur mobile peut être monté dans un piston mobile relié au bâti par des moyens élastiques, ou bien incorporé dans un tel piston.

Le piston mobile peut être un piston étangé monté coulissant dans un alésage étagé ou bien dans un volume étagé défini par le bâti et une pièce rapportée interne.

La chambre à volume variable comprise entre l'épaulement du piston étagé et l'épaulement de l'alésage étagé peut être reliée directement en amont de l'amortisseur fixe.

On a décrit ci-après, à titre d'exemple non limitatif, un mode de réalisation du dispositif amortisseur selon l'invention, avec référence aux dessins annexés dans lesquels :

La Figure 1 est le schéma théorique de ce dispositif amortisseur;

La Figure 2 montre la courbe de fonctionnement théorique;

La Figure 3 est une vue en coupe axiale du dispositif amortisseur;

La Figure 4 montre la courbe de fonctionnement de l'amortisseur de la Figure 3.

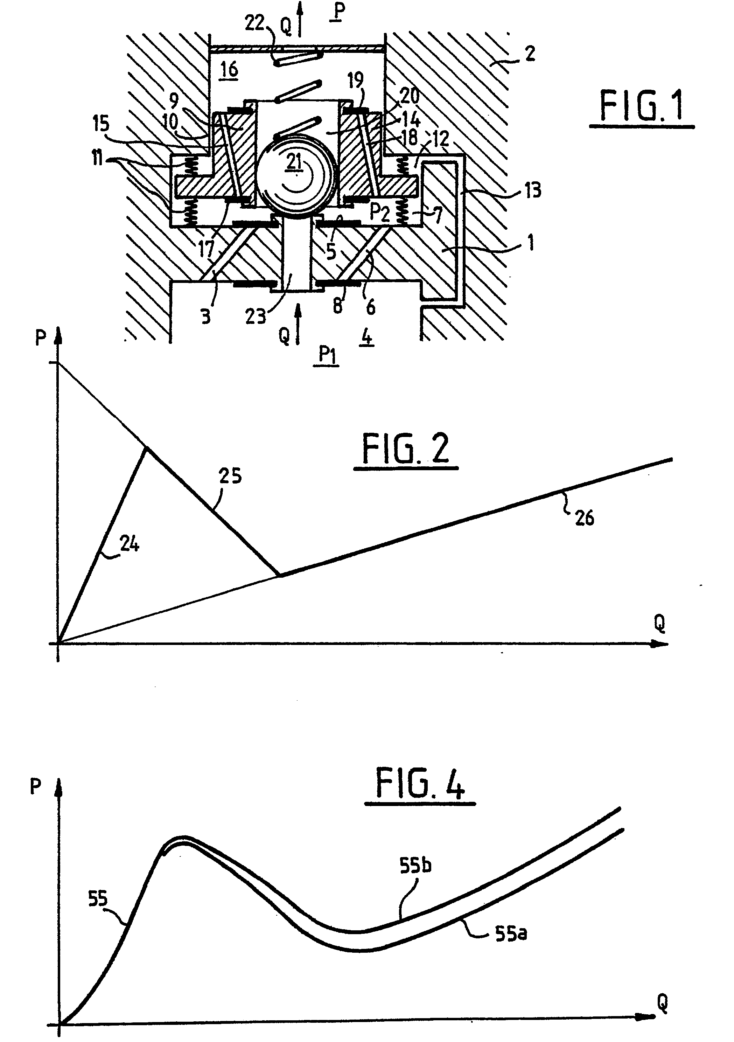

Tel qu'il est représenté schématiquement à la Figure 1, le dispositif amortisseur selon l'invention comprend un premier amortisseur 1 monté sur un bâti fixe 2. Cet amortisseur comporte un premier conduit calibré 3 qui à l'une de ses extrémités débouche librement dans la chambre 4 d'un vérin de suspension et est muni d'un clapet 5 à son autre extrémité; il comporte un second conduit calibré 6 qui débouche à l'une de ses extrémités dans une chambre intérieure 7 de section S et est muni d'un clapet 8 à son autre extrémité, c'est-à-dire à son extrémité débouchant dans la chambre 4. Selon que le débit s'établit dans un sens ou dans l'autre, il circule par le conduit 3 ou par le conduit 6.

Un piston étagé 9 peut coulisser dans un alésage étagé 10 du bâti 2 à l'encontre de moyens élastiques 11. Ce piston délimite la chambre 7 avec l'amortisseur 1; il délimite par ailleurs avec le bâti 2 une chambre annulaire 12 de section s qui est reliée par un conduit 13 à la chambre 4 du vérin de suspension. Ce piston constitue un deuxième amortisseur 14 et comprend à cet effet un premier conduit calibré 15 dont l'une des extrémités débouche librement dans une chambre 16 reliée à un accumulateur de suspension alors que son extrémité débouchant dans la chambre 7 est munie d'un clapet 17; il comprend un deuxième conduit calibré 18 monté de manière inverse, c'est-à-dire qu'il débouche librement dans la chambre 7 alors que son extrémité opposée est munie d'un clapet 19.

Le piston 9 est percé d'un trou 20 dans lequel peut coulisser un clapet 21, de section $\Sigma$, qui dans le

cas présent est constitué par une bille. Un ressort 22 tend à appliquer le clapet 21 sur l'orifice d'un conduit axial 23, de section $\sigma$ ménagé dans l'amortisseur 1. Quand ce clapet est écarté de son siège, le conduit 23 met la chambre 4 directement en communication avec la chambre 7 en court-circuitant l'amortisseur 1.

Le fonctionnement de cet amortisseur est le suivant. Dans le cas d'un mouvement ascendant régulier de la roue, il s'établit un débit de liquide entre le vérin de suspension et l'accumulateur, donc de la chambre 4 à la chambre 16.

Si la pression dans le vérin de suspension a pour valeur $P_1$, la pression dans la chambre 7 a pour valeur $P_2$ liée à la pression $P_1$ par la relation $P_1 - P_2 = \alpha Q$, Q étant le débit de liquide et $\alpha$ le coefficient de proportionnalité de l'amortisseur 1. Cette pression $P_2$ est elle-même liée à la pression $P_0$ de l'accumulateur hydropneumatique par la relation $P_2 - P_0 = \beta Q$, $\beta$ étant le coefficient de proportionnalité de l'amortisseur 14.

Si l'on a :
$$(P_1 - P_0)\,\sigma + (P_2 - P_0)\,(\Sigma - \sigma) < R$$
R étant la force exercée par le ressort 22 sur le clapet 21, l'effort exercé sur le clapet par le liquide est insuffisant pour vaincre l'action du ressort et le clapet 21 est maintenu appliqué sur son siège. Le liquide traverse successivement l'amortisseur 1 et l'amortisseur 14. Dans ce cas, l'on a : $p = P_1 - P_0 = (\alpha + \beta)\,Q$

La courbe représentant à ce stade la variation de la différence de pression p en fonction du débit Q est représentée à la Figure 2 par la droite 24.

Si l'écart de pression atteint une valeur telle que l'on ait :
$$(P_1 - P_0)\,\sigma + (P_2 - P_0)\,(\Sigma - \sigma) = R \quad (1)$$
le clapet 21 se soulève de son siège et une partie du débit passe directement du vérin dans la chambre 7, sans passer à travers l'amortisseur 1. Lorsque le clapet est grand ouvert, tout le liquide passe par le conduit 23 et l'amortissement ne se fait plus que par l'amortisseur 14. La chambre 12 étant reliée au vérin de suspension par le conduit 13, un accroissement instantané de la pression dans le vérin provoque un déplacement du piston 10 qui réduit le volume de la chambre 7. Il en résulte que l'amortisseur 14 amortit davantage que s'il était monté fixe sur le bâti.

Lorsque le clapet 21 se soulève de son siège, la relation (1) est satisfaite et l'on a :

$$p = P_1 - P_0 = \frac{R}{\sigma} - (P_2 - P_0)\,\frac{\Sigma - \sigma}{\sigma}$$

ou, en remplaçant $P_2 - P_0$ par sa valeur $\beta Q$

$$p = \frac{R}{\sigma} - \beta Q\,\frac{\Sigma - \sigma}{\sigma}$$

Cette relation, qui représente la partie transitoire où l'amortisseur 1 n'est progressivement plus traversé que par une partie du liquide, est représentée à la Figure 2 par la droite 25, de pente négative.

Quand le clapet 21 est grand ouvert, ce qui se produit pour un débit

$$Q = \frac{R}{\beta \Sigma}$$

, les pressions $P_1$ et $P_2$ sont égales et l'on a :
$p = P_1 - P_0 = P_2 - P_0 = \beta Q$
on retrouve la caractéristique correspondant à l'amortisseur 14 seul et qui est représentée à la Figure 2 par la droite 26.

Dans le cas d'un mouvement descendant de la roue, le débit est dirigé de l'accumulateur vers le vérin, le clapet 21 reste toujours fermé et les deux amortisseurs 1 et 14 sont toujours en série.

Lors d'une augmentation brutale du débit, une partie de celui-ci est dérivée de la chambre 4 dans la chambre 12 qui, en augmentant de volume diminue celui de la chambre 4, et augmente instantanément le débit qui traverse l'amortisseur 14; il en résulte une augmentation de la pression $(P_2 - P_1)$, ce qui facilite la levée du clapet 21 en agissant sur sa surface $(\Sigma - \sigma)$.

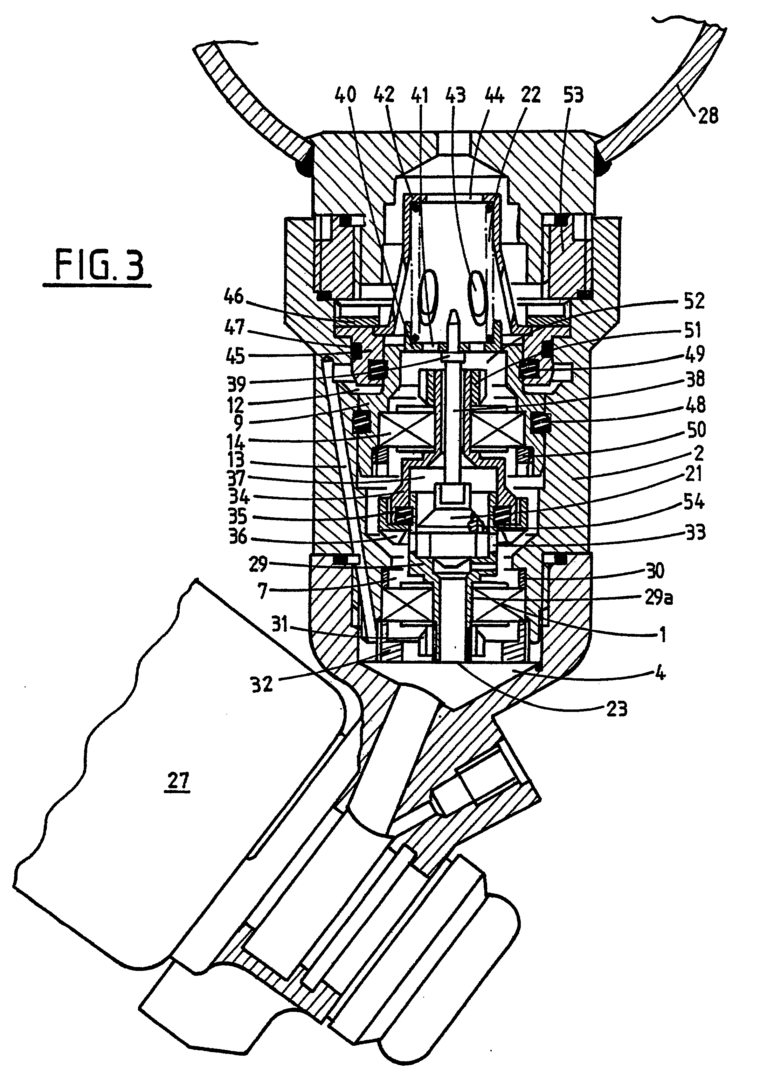

La Figure 3 montre un mode de réalisation pratique du dispositif amortisseur selon l'invention; à cette Figure les éléments portent les mêmes références que les éléments correspondants de la Figure 1. On voit à cette Figure le vérin de suspension 27 et l'accumulateur 28. L'amortisseur 14 est ici indépendant du piston étagé 9 et disposé dans un alésage de ce piston.

L'amortisseur 1 est en appui sur l'épaulement d'une entretoise 29 et sur une cale 30, elle-même en appui sur un épaulement du bâti 2. Il est maintenu par un écrou 31 vissé sur un prolongement tubulaire 29 a de l'entretoise 29 qui traverse axialement l'amortisseur 1. Un écrou 32 vissé dans un taraudage du bâti 2 maintient périphériquement l'amortisseur 1.

L'entretoise 29 ainsi que son prolongement tubulaire 29 a comportent un perçage axial étagé. La partie étroite de ce perçage, qui traverse l'amortisseur 1, constitue le conduit 23.

A l'intérieur du perçage axial de l'entretoise est monté coulissant le clapet 21 qui est ici un clapet étagé. Sa partie inférieure, de faible section, peut obturer le perçage 23, alors que sa partie supérieure de grande section coulisse dans le perçage axial de l'entretoise 29. Celle-ci comporte des orifices périphériques 33 qui relient la chambre 7 au-dessus de l'amortisseur 1 et la partie du perçage de l'entretoise située en regard de la partie inférieure, de faible section, du clapet 21.

Une deuxième entretoise étagée 34 peut coulisser par rapport à l'entretoise 29 en déformant un joint d'étanchéité 35 disposé entre les deux entretoises 29 et 34. Ce joint est maintenu par un écrou 36. Il assure l'étanchéité entre la chambre 7 et la chambre 37 située au-dessus du clapet 21 et intérieure aux entretoises 29 et 34.

La partie étroite de l'entretoise 34 est traversée par un prolongement 38 du clapet 21, qui comporte une collerette 39 sur laquelle repose une coupelle inférieure 40 qui transmet l'effort du ressort 22. Cette coupelle 40 admet un fond percé de trous 41 pour le libre passage du liquide.

Le ressort 22 est en appui sur une coupelle supérieure 42 percée périphériquement de trous 43 et d'un trou axial 44. La coupelle supérieure 42 repose sur un support 45 contre lequel elle est maintenue en appui par un écrou 46 vissé dans un taraudage du bâti 2. Un joint torique 47 assure l'étanchéité entre le support 45 et le bâti 2.

Le piston étagé 9 peut coulisser dans le bâti 2 et le support 45 en déformant les joints 48 et 49. L'épaulement du piston coopère avec le support 45 pour définir la chambre 12 directement alimentée à partir de la chambre 4 du vérin par le conduit 13 qui pourrait être intérieur ou extérieur au bâti 2.

Le deuxième amortisseur 14 en appui sur un épaulement du piston 9 est maintenu périphériquement par un écrou 50 solidarisant ainsi l'amortisseur 14 et le piston 9. L'amortisseur 14 comporte un perçage axial traversé par un prolongement de l'entretoise 34 et par le prolongement 38 du clapet 21. Un écrou 51 vissé sur le prolongement de l'entretoise 34 maintient l'amortisseur 14 en appui sur un épaulement extérieur de l'entretoise 34.

Quand le piston 9 se déplace en déformant les joints 48 et 49, il entraîne l'amortisseur 14 et l'entretoise 34 ainsi que l'écrou 36 en déformant le joint 35.

Le prolongement 38 du clapet 21 qui passe à travers la partie étroite de l'entretoise 34, permet la circulation du liquide de telle sorte que la chambre de liquide 52 au-dessus de l'amortisseur 14 se prolonge à l'intérieur de l'entretoise 34 et de la partie supérieure de l'entretoise 29 jusqu'à l'étage de grande section Σ du clapet 21.

Cette chambre 52 est en communication par les per çages 41 et 43 des coupelles inférieure 40 et supérieure 42 avec l'accumulateur 28 qui est lui-même solidarisé au bâti 2 par l'intermédiaire d'un écrou 53 comportant un filetage interne pour le raccordement à l'accumulateur et un filetage externe pour le raccordement au bâti 2.

Un trou calibré 54 percé dans l'étage de grande section du clapet 21 permet l'équilibre des pressions entre l'amont et l'aval de l'amortisseur variable en l'absence de débit.

Le fonctionnement de ce dispositif est analogue à celui du dispositif théorique de la Figure 1. La Figure 4 montre en 55 $\underline{a}$ la courbe mesurée de la différence de pression $P_1 - P_o$ en fonction du débit Q, pour une fréquence d'oscillations de 1Hz; la courbe 55 $\underline{b}$ est la courbe pour une fréquence d'oscillations de 20 Hz. En raison de la mobilité de l'amortisseur 14 les courbes 55 $\underline{a}$ et 55 $\underline{b}$ sont voisines, ce qui montre le bon fonctionnement dynamique du dispositif.

Ce type d'amortisseur variable particulièrement bien adapté à une suspension hydropneumatique peut s'appliquer à tout autre dipositif dans lequel un déplacement impose un débit de fluide.

## Revendications

1. Dispositif amortisseur variable pour suspension de véhicule automobile interposé entre un vérin de suspension et un accumulateur hydropneumatique de véhicule, comportant un bâti (2), un premier amortisseur (1) monté sur le bâti et un circuit de déri-vation (23) qui est monté en parallèle avec le premier amortisseur (1) caractérisé en ce qu'il comporte un piston (9) portant un second amortisseur (14) en série avec le premier amortisseur sur lequel est interposé un clapet (21) indépendant du second amortisseur (14) et soumis à l'action de moyens élastiques (22).

2. Dispositif amortisseur selon la revendication 1, caractérisé en ce qu'il est monté de manière que le clapet (21) puisse s'écarter de son siège lorsque le débit est orienté du vérin vers l'accumulateur.

3. Dispositif amortisseur selon la revendication 1 ou 2, caractérisé en ce que le circuit de dérivation (23) est constitué par un conduit prévu axialement dans l'amortisseur fixe (1) lui-même.

4. Dispositif amortisseur selon l'une des revendications 1 à 3, caractérisé en ce que le piston mobile (9) est un piston étagé monté coulissant dans un alésage étagé (10) ou bien dans un volume étagé défini par le bâti (2) et une pièce rapportée interne (45).

5. Dispositif amortisseur selon la revendication 4, caractérisé en ce que le chambre à volume variable (12) comprise entre l'épaulement du piston étagé (9) et l'épaulement de l'alésage ou volume étagé est reliée directement par un conduit (13), en amont de l'amortisseur fixe (1).

6. Dispositif amortisseur selon les revendications 2 et 5, caractérisé en ce que la chambre (12) à volume variable est reliée directement au vérin de suspension (27).

7. Dispositif amortisseur selon la revendication 5 ou 6, caractérisé en ce que les moyens élastiques de rappel du piston étagé (9) sont constitués par les joints d'étanchéité (48 et 49) disposés entre le piston et le bâti (2), de part et d'autre de la chambre à volume variable (12).

8. Dispositif amortisseur selon l'une quelconque des revendications précédentes, caractérisé en ce que le clapet (21) comporte deux étages, un premier étage pour obturer le circuit de dérivation (23) et un second étage, de section plus grande, qui sépare la chambre (7) comprise entre les deux amortisseurs (1 et 14) de la partie aval de l'amortisseur mobile.

9. Dispositif amortisseur selon les revendications 2 et 8, caractérisé en ce que le second étage du clapet sépare la chambre (7) de la chambre (52) comprise entre l'amortisseur (14) et l'accumulateur (28).

## Patentansprüche

1. Variable Dämpfungsvorrichtung für eine Kraftfahrzeug-Radaufhängung, die zwischen einen Aufhängezylinder und einen hydropneumatischen Speicher des Fahrzeugs eingeschaltet ist, mit einem Gehäuse (2), einem am Gehäuse montierten ersten Dämpfer (1) und einem Ableitungskreis (23), der parallel zum ersten Dämpfer (1) angeordnet ist, dadurch gekennzeichnet, daß sie einen Kolben (9) aufweist, der einen zweiten Dämpfer (14) trägt, der in Serie zum ersten Dämpfer angeordnet ist, an welchem eine Ventilklappe (21) angeordnet ist, die vom zweiten Dämpfer (14) unabhängig und der Einwirkung von elastischen Mitteln (22) unterworfen ist.

2. Dämpfungsvorrichtung nach Anspruch 1, dadurch gekennzeichnet, daß sie so ausgebildet ist, daß die Ventilklappe (21) von ihrem Sitz abheben kann, wenn der Durchsatz in Richtung von Zylinder zum Speicher erfolgt.

3. Dämpfungsvorrichtung nach Anspruch 1 oder 2, dadurch gekennzeichnet, daß der Ableitungskreis (23) durch eine Leitung gebildet ist, die axial im fest angeordneten Dämpfer (1) selbst verläuft.

4. Dämpfungsvorrichtung nach einem der Ansprüche 1 bis 3, dadurch gekennzeichnet, daß der bewegliche Kolben (9) ein abgestufter Kolben ist, der gleitend in einer abgestuften Bohrung (10) oder auch in einem abgestuften Volumen angeordnet ist, das durch das Gehäuse (2) und ein inneres Bezugsteil (45) definiert ist.

5. Dämpfungsvorrichtung nach Anspruch 4, dadurch gekennzeichnet, daß die Kammer (12) mit variablem Volumen, die zwischen der Schulter des abgestuften Kolbens (9) und der Schulter der Bohrung oder des abgestuften Volumens liegt, über eine Leitung (13) direkt mit einer Stelle stromaufwärts vor dem fest angeordneten Dämpfer (1) verbunden ist.

6. Dämpfungsvorrichtung nach den Ansprüchen 2 und 5, dadurch gekennzeichnet, daß die Kammer (12) mit variablem Volumen direkt mit dem Aufhängezylinder (27) verbunden ist.

7. Dämpfungsvorrichtung nach Anspruch 5 oder 6, dadurch gekennzeichnet, daß die elastischen Rückstellmittel des abgestuften Kolbens (9) durch Dichtungen (48 und 49) gebildet sind, welche zwischen dem Kolben und dem Gehäuse (2) beiderseits der Kammer (12) mit variablem Volumen angeordnet sind.

8. Dämpfungsvorrichtung nach einem der vorhergehenden Ansprüche, dadurch gekennzeichnet, daß die Ventilklappe (21) zwei Stufen aufweist, nämlich eine erste Stufe zum Verschließen des Ableitungskreises (23) und eine zweite Stufe mit größerem Querschnitt, welche die zwischen den beiden Dämpfern (1 und 14) elegene Kammer (7) von dem stromabwärts zum beweglichen Dämpfer gelegenen Teil abtrennt.

9. Dämpfungsvorrichtung nach den Ansprüchen 2 und 8, dadurch gekennzeichnet, daß die zweite Stufe der Ventilklappe die Kammer (7) von der zwischen dem Dämpfer (14) und dem Speicher (28) gelegenen Kammer (52) abtrennt.

## Claims

1. Variable damping device for a motor vehicle suspension interposed between a suspension jack and a hydropneumatic accumulator of a vehicle, comprising a housing (2), a first damper (1) mounted on the housing, and a shunt circuit (23) which is mounted in parallel with the first damper (1), characterized in that it comprises a piston (9) carrying a second damper (14) in series with the first damper on which is interposed a valve (21) independent of the second damper (14) and subjected to the action of resilient means (22).

2. Damping device according to claim 1, characterized in that it is mounted so that the valve (21) may move away from its seat when the flow is oriented form the jack to the accumulator.

3. Damping device according to claim 1 or 2, characterized in that the shunt circuit (23) is formed by a duct provided axially in the fixed damper (1) itself.

4. Damping device according to one of claims 1 to 3, characterized in that the mobile piston (9) is a stepped piston mounted for sliding in a stepped bore (10) or else in a stepped volume defined by the housing (2) and an internal added piece (45).

5. Damping device according to claim 4, characterized in that the variable volume chamber (21) between the shoulder of the stepped piston (9) and the shoulder of the stepped bore or volume is connected directly by a duct (13), upstream of the fixed damper (1).

6. Damping device according to claims 2 and 5, characterized in that the variable volume chamber (12) is connected directly to the suspension jack (27).

7. Damping device according to claim 5 or 6, characterized in that the resilient return means of the stepped piston (9) are formed by seals (48, 49) disposed between the piston and the housing (2), on each side of the variable volume chamber (12).

8. Damping device according to one of the preceding claims, characterized in that the valve (21) comprises two steps, a first step for closing the shunt circuit (23) and a second step, of larger section, which separates the chamber (7) between the two dampers (1, 14) from the downstream portion of the mobile damper.

9. Damping device according to claims 2 and 8, characterized in that the second step of the valve separates the chamber (7) from the chamber (52) situated between the damper (14) and the accumulator (28).

FIG.1

FIG. 2

FIG. 4

EP 0 264 324 B1

FIG. 3